# EUROPÄISCHE PATENTSCHRIFT

(11) **EP 0 536 428 B1**
(45) Veröffentlichungstag und Bekanntmachung des Hinweises auf die Patenterteilung: **17.07.1996**
(21) Anmeldenummer: 91116162.8
(22) Anmeldetag: 23.09.1991
(51) Int. Cl.: H04N 5/445

(54) **Gerät zum Verarbeiten von in Zeilen aufgeteilten Videosignalen**
Apparatus for processing video signals split into lines
Appareil de traitement de signaux vidéo répartis sur les lignes

(43) Veröffentlichungstag der Anmeldung: 14.04.1993
(73) Patentinhaber: SIEMENS AKTIENGESELLSCHAFT, 80333 München (DE)
(72) Erfinder: Apetz, Ulrich, Dipl.-Ing., W-8011 Baldham (DE); Kramer, Ronald, Dipl.-Ing., W-8000 München 60 (DE); Sellar, David, Dipl.-Ing., W-8000 München 80 (DE)

(56) Entgegenhaltungen:
- IEEE TRANSACTIONS ON CONSUMER ELECTRONICS. Bd. 36, Nr. 3, August 1990, NEW YORK US Seiten 693 - 698; J. MEYER: 'TELETEXT: A TRUE MONOCHIP SOLUTION'

## Beschreibung

Die Erfindung betrifft ein Gerät zum Verarbeiten von in Zeilen aufgeteilten Videosignalen gemäß dem Oberbegriff des Anspruchs 1.

Geräte zum Verarbeiten von in Zeilen aufgeteilten Videosignalen wie z. B. Fernsehgeräte, die die Möglichkeit aufweisen, gleichzeitig Bildsignale und Videotextsignale darzustellen, sind seit langem bekannt. Um Bildsignale und Videotextsignale gleichzeitig darstellen zu können weisen derartige Geräte unter anderem integrierte Schaltungen auf, die die entsprechenden Steuersignale bereitstellen. So ist z. B. aus Valvo integrierte Digitalschaltungen der Unterhaltungselektronik, 1988 auf S. 201 ff eine monolithisch integrierte NMOS-Schaltung zur Videotext- und Datenverarbeitung bekannt. Die gezeigte Schaltung ermöglicht es, ein Fernsehgerät zu entwickeln, welches beim Empfangen eines Senders gleichzeitig dessen Bildinformation sowie die ebenfalls von diesem Sender übertragenen Videotextsignale zu entschlüsseln und auf dem Bildschirm darzustellen.

Derartige Geräte sind zwar in der Lage, vom Empfangssignal sowohl die sog. Display-Daten (Bildinformation) sowie die ebenfalls übertragenen Acquisitionsdaten (Videotextdaten) zu dekodieren und darzustellen, sollte jedoch der Anwender die Display-Daten eines ersten Senders betrachten und eine Einblendung der Videotextdaten eines weiteren Senders wünschen, so ist dies mit Geräten gemäß dem Stand der Technik nicht möglich, da insbesondere die entsprechenden Taktsignale zur Verarbeitung der beiden Videosignale nicht zur Verfügung stehen.

Aufgabe der Erfindung ist es daher, ein Gerät zum Verarbeiten von in Zeilen aufgeteilten Videosignalen anzugeben, welches eine Anordnung zur Bereitstellung von Displaytaktsignal und Acquisitionstaktsignal enthält, die von unabhängigen Quellsignalen gespeist werden können.

Diese Aufgabe wird gemäß dem kennzeichnenden Teil des Anspruchs 1 gelöst. Weiterbildungen sind Kennzeichen der Unteransprüche.

Vorteil der Erfindung ist, daß durch Vorsehen einer zusätzlichen Funktionseinheit zur Taktgenerierung zwei voneinander unabhängige Taktsignale erzeugt werden können. Diese Art der unabhängigen Taktgenerierung ist aus IEEE Transactions on Consumer Electronics, Band 36, Nr. 3, August 90, Seiten 693-698 bekannt. Hier wird aber nur jeweils eine digitale Nachlaufsynchronisationsschaltung verwendet. Ein Vorteil ergibt sich durch die Verwendung von Umschaltern, wie in den abhängigen Ansprüchen definiert, die an bestimmten Signalzweigen der Funktionseinheiten vorgesehen sind und die gegenseitige Beeinflussung der Funktionseinheiten ermöglichen. Dadurch lassen sich verschiedene später beschriebene Betriebsarten realisieren.

Die Erfindung wird anhand von zwei Figuren näher erläutert.
- FIG 1: zeigt ein prinzipielles Blockschaltbild des erfindungsgemäßen Geräts.
- FIG 2: zeigt einen Ausschnitt der erfindungsgemäßen Anordnung der in FIG 1 dargestellten Funktionseinheit 7.

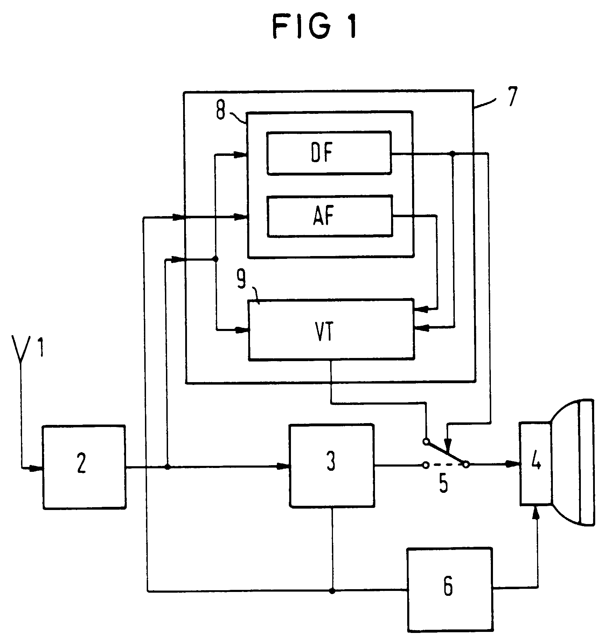

Das in FIG 1 dargestellte Gerät zum Verarbeiten von in Zeilen aufgeteilten Videosignalen weist eine Antenne 1 auf, die mit einer ersten Funktionseinheit 2 verbunden ist. Diese Funktionseinheit 2 dient zum Aufbereiten der Empfangssignale der entsprechenden Sendern. Die von der Funktionseinheit 2 bereitgestellten Signale führen zu einer zweiten Funktionseinheit 3, die als Verarbeitungseinheit für Farbdecodierung, Bildsignalverstärkung und als Videoendstufe dient. Das von der Funktionseinheit 3 gelieferte Ausgangssignal wird über einen Umschalter 5 einer Bildröhre 4 zugeführt. Weiterhin werden die Ausgangssignale der Funktionseinheit 2 einer dritten Funktionseinheit 7 zugeführt. Diese beinhaltet unter anderem die Anordnung 8 zur Bereitstellung der Display- und Acquisitionstaktsignale DF, AF. Weiterhin enthält sie eine Einheit 9 die eine Videotextverarbeitungseinheit VT beinhaltet. Die Ausgangssignale der Display- bzw. Aquisitionseinheit DF, AF werden der Videotextverarbeitungseinheit VT zugeführt. Diese erzeugt dann ein Ausgangssignal, daß dem zweiten Umschaltkontakt des Umschalters 5 zugeführt wird. Der Umschalter 5 wird durch das Ausgangssignal der Displayeinheit DF gesteuert.

Erfindungsgemäß werden der dritten Funktionseinheit 7 z. B. zwei Videosignale von der Funktionseinheit 2 zugeführt. Diese gelangen zur Einheit 8 und zur Einheit 9. Vorzugsweise ist das erste Videosignal derart vorverarbeitet, daß lediglich die horizontalen und vertikalen Synchronisationssignale bereitgestellt werden. Es könnte aber auch lediglich das Video-Composite-Sync-Signal (VCS) eingespeist werden. In diesem Fall wäre eine zusätzliche Anordnung innerhalb oder außerhalb der Funktionseinheit 5 notwendig, die die vertikalen und horizontalen Synchronisationssignale daraus erzeugt. Das zweite Videosignal kann dann z. B. das analoge oder digitale FBAS-Signal eines zweiten Senders sein. Das erste Videosignal wird über die Funktionseinheit 3 außerdem einer vierten Funktionseinheit 6 sowie der in der Einheit 7 enthaltenen Anordnung 8 zugeführt. Diese vierte Funktionseinheit 6 enthält die Ablenkstufe, deren Ausgangssignal der Bildröhre 4 zugeführt wird.

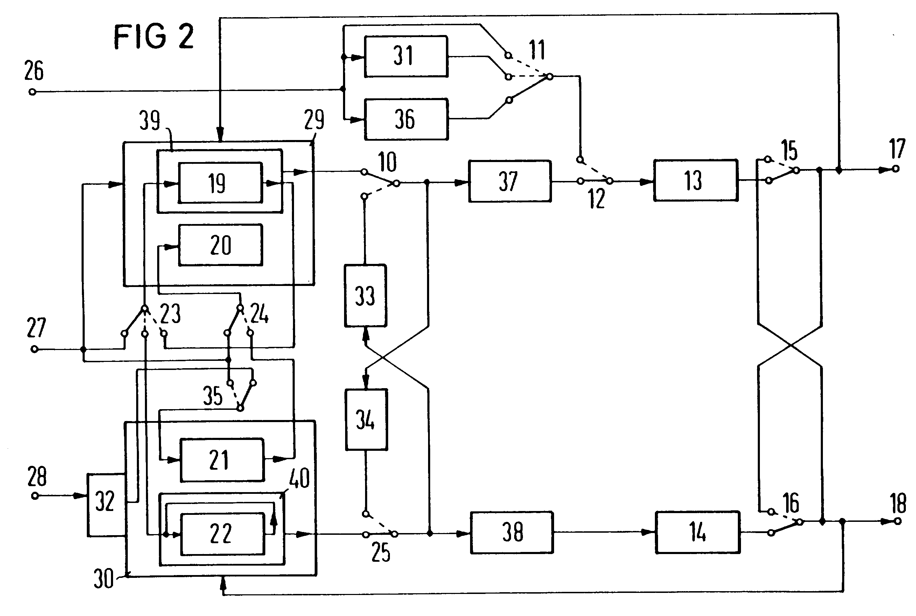

FIG 2 zeigt den für die Takterzeugung notwendigen Schaltungsteil der dritten Funktionseinheit 7 aus FIG 1. An der Eingangsklemme 26 liegt ein Taktsignal, an der Eingangsklemme 27 liegt das erste und an 28 das zweite Videosignal. Ein Umschalter 11 mit drei Umschaltkontakten ist vorgesehen, dessen erster Umschaltkontakt mit der Eingangsklemme 26 verbunden ist. Zwei Frequenzteiler 31 und 36 teilen das an der Eingangsklemme 26 anliegende Taktsignal. Die Ausgänge der Teiler 31 und 36 sind mit jeweils einem Umschaltkontakt des Umschalters 11 verbunden. Eine erste eine digitale Nachlaufsynchronisationsschaltung 39 (PLL) enthaltene Einheit 29 ist vorgesehen. Ein erster Eingang dieser Einheit 29 ist mit der Eingangsklemme 27 verschaltet. Die Einheit 29 enthält unter anderem einen ersten Zähler 19, der unter anderem als Zeilen-Positions-Zähler dient, sowie einen zweiten Zähler 20, der als Zeilenzähler dient. Beide Zähler 19 und 20 weisen jeweils einen Rücksetzeingang auf. Der Rücksetzeingang des Zählers 19 ist mit dem Mittelkontakt eines Umschalters 23 mit 3 Umschaltkontakten und der Rücksetzeingang des Zählers 20 mit dem Mittelkontakt eines Umschalters 24 verbunden. Ein Umschaltkontakt des Umschalters 23 ist mit der Eingangsklemme 27 und einer mit dem Ausgang des Zählers 19 verbunden.

Eine zweite Einheit 30 ist vorgesehen, die ebenfalls einen Zähler sowie eine digitale Nachlaufsynchronisationsschaltung 40 (PLL) mit ebenfalls einem Zähler 22 enthält. Weiterhin kann sie einen Analog-Digital-Wandler 32 enthalten, der von dem Signal an der Ausgangsklemme 18 getaktet wird. Dieser ist der Einheit 30 vorgeschaltet. Der Zähler 21 dient wiederum als Zeilenzähler und weist einen Ausgang auf, der mit dem ersten Schaltkontakt des Schalters 24 verbunden ist. Der zweite Umschaltkontakt des Umschalters 24 ist mit der Eingangsklemme 27 verschaltet. Der Zähler 22 dient als Zeilen-Positions-Zähler setzt sich selbst zurück und weist ebenfalls einen Ausgang auf, der mit einem Schaltkontakt des Umschalters 23 und mit seinem Eingang verbunden ist. Ein weiterer Umschalter 35 ist vorgesehen. Sein Mittelkontakt ist mit dem Rücksetzeingang des Zählers 21 und sein erster Schaltkontakt mit der Eingangsklemme 27 verschaltet. Der zweite Schaltkontakt des Umschalters 35 ist mit dem Ausgang des Analog-Digital-Wandlers 32 verbunden.

Die Einheit 30 hat einen ersten Eingang, der mit der Eingangsklemme 28 verschaltet ist. Ein Umschalter 10 mit zwei Umschaltkontakten ist vorgesehen. Die Umschaltkontakte sind zum einen mit dem Ausgang der ersten Einheit 29 der einen digitalen Zahlenwert liefert und zum anderen mit Mitteln 33 zum arithmetischen Teilen oder Vervielfachen verbunden. Der Mittelkontakt des Umschalters 10 ist mit einem digitalen ansteuerbaren Oszillator 37 verschaltet. Ein weiterer Umschalter 12 mit zwei Umschaltkontakten, dessen erster Umschaltkontakt mit dem Ausgang des Oszillators 37 und dessen zweiter Umschaltkontakt mit dem Mittelkontakt des Umschalters 11 verbunden ist, ist vorgesehen. Der Mittelkontakt des Umschalters 12 ist mit dem Eingang einer analogen Nachlaufsynchronisationsschaltung 13 (PLL) verbunden. Ein weiterer Umschalter 15 mit zwei Umschaltkontakten, dessen erster Umschaltkontakt mit dem Ausgang der analogen PLL l3 verbunden ist, ist vorgesehen.

Mit 17 ist eine Ausgangsklemme bezeichnet, die mit dem Mittelkontakt des Umschalters 15 verschaltet ist. Das an der Ausgangsklemme 17 anliegende Displaytaktsignal wird außerdem einem weiteren Eingang der Einheit 29 zugeführt. Am Ausgang der Einheit 30 ist ein digital dargestellter Zahlenwert abgreifbar, der weiterhin einem ersten Umschaltkontakt eines Umschalters 25, dessen Mittelkontakt mit dem Eingang eines digital ansteuerbaren Oszillators 38 verschaltet ist, zugeführt wird. Der zweite Umschaltkontakt ist über Mittel 34 zum arithmetischen Teilen oder Vervielfachen mit dem Eingang des digital ansteuerbaren Oszillators 37 verschaltet. Der Ausgang des Oszillators 38 ist mit dem Eingang einer analogen Nachlaufsynchronisationsschaltung (PLL) 14 verbunden. Deren Ausgang ist mit dem ersten Umschaltkontakt des eines weiteren Umschalters 16 verbunden. Der zweite Umschaltkontakt des Umschalters 16 ist mit dem Mittelkontakt des Umschalters 15 verbunden. Der zweite Umschaltkontakt des Umschalters 15 ist mit dem Mittelkontakt des Umschalters 16 verschaltet. Eine Ausgangsklemme 18 ist vorgesehen, die mit dem Mittelkontakt des Umschalters 16 verschaltet ist. Schließlich wird das Acquisitionstaktsignal an der Ausgangsklemme 18 dem zweiten Eingang der Einheit 30 zugeführt.

Die in den Funktionseinheiten 29 und 30 enthaltenen Zeilenzähler 20 und 21 erzeugen vertikalfrequente Impulse wohingegen die Zeilenpositionszähler 19 und 22 horizontalfrequente Impulse erzeugen. Das von der Einheit 29 bzw. 30 erzeugte Ausgangssignal stellt einen Zahlenwert (Inkrement) dar, mit dem der nachfolgend geschaltete Oszillator 37 bzw. 38 angesteuert wird. Dieser erzeugt ein Ausgangssignal mit einer diesem Zahlenwert (Inkrement) proportionalen Frequenz. Dieses gelangt über die analoge PLL 13 bzw. 14 zur Ausgangsklemme 17 bwz. 18 und wird an die Einheit 29 bzw. 30 rückgekoppelt. Die Einheit 29, der digital steuerbare Oszillator 37 und die analoge PLL 13 können somit einen digitalen Phasenregelkreis für das Displaytaktsignal bilden. Ebenso kann durch die Einheit 30, den digital steuerbaren Oszillator 38 sowie die analoge PLL 14 ein digitaler Phasenregelkreis für das Acquisitionstaktsignal gebildet werden.

Die diversen Umschalter gemäß FIG 2 erlauben eine Vielzahl von Kombinationen zur Takterzeugung, von denen nachfolgend die wichtigsten näher erläutert werden. Sollte nur eine spezielle Betriebsart gewünscht sein, so können die Umschalter durch eine entsprechende feste Verdrahtung ersetzt werden.

Für alle nachfolgend beschriebenen Fälle sollen an der Eingangsklemme 26 ein externer Takt der z. B. von einer speziellen Funktionseinheit des Geräts geliefert wird, an der Eingangsklemme 27 die horizontalen und/ oder vertikalen Synchronisationssignale und/oder das VCS-Signal und an der Eingangsklemme 28 das FBAS-Signal und/oder das VCS-Signal anliegen. Je nach Anzahl der Signale sind entsprechend viele Eingänge und Eingangsleitungen vorgesehen. Der Begriff Eingangsklemme ist daher sinngemäß im Blockschaltbild gemäß FIG 2 anzuwenden.

Zur Verarbeitung des analogen FBAS-Signales an der Klemme 28 weist die Einheit 30 einen Analog/Digital-Wandler 32 auf, der das analoge FBAS-Signal für die nachfolgende digitale PLL aufbereitet. An der Ausgangsklemme 17 ist das Display-Taktsignal und an der Ausgangsklemme 18 das Acquisitionstaktsignal abgreifbar.

In einer ersten Betriebsart soll das Acquisitionstaktsignal aus einer ersten Quelle und das Displaytaktsignal aus einer zweiten Quelle erzeugt werden. Hierzu liegt ein FBAS-Signal an der Eingangsklemme 28 und wird in der Einheit 30 durch den A/D-Wandler "digitalisiert". Eine nachgeschaltete Verarbeitungseinheit innerhalb der Einheit 30 erzeugt aus diesem digitalen Signal ein digitales Ausgangssignal sowie ein vertikales Synchronisationssignal welches über den Umschalter 35 den Zähler 21 rücksetzt, der außerdem im Schwunggradbetrieb arbeiten kann. Das so erzeugte digitale Ausgangssignal wird dem digital ansteuerbaren Oszillator 38 zugeführt, welcher daraus ein analoges Taktsignal erzeugt, welches wiederum der analogen PLL 14 zugeführt wird. Über den Umschalter 16 wird das Ausgangstaktsignal der PLL 14 an die Ausgangsklemme 18 geführt und wird über eine Rückkopplungsleitung zur Einheit 30 rückgekoppelt.

Die Einheit 29 mit der darin enthaltenen digitalen PLL 39 rastet auf die horizontalen Synchronisationsimpulse oder auf den H-Anteil des VCS-Signals ein. Der Zeilen-Positionszähler 19 wird über den Umschalter 23 durch sein eigenes Rücksetzsignal gesteuert. Der Zeilenzähler 20 der Einheit 29 kann im Schwunggradbetrieb arbeiten und wird über den Umschalter 24 durch das an der Klemme 27 anliegende vertikale Synchronisationssignal zurückgesetzt. Die Einheit 29 enthält Mittel, die aus dem Video-Composite-Signal das horizontale und das vertikale Synchronisationssignal erzeugen. Das digitale Ausgangssignal der Einheit 29 wird über den Umschalter 10 an den digitalen steuerbaren Oszillator 37 geführt. Dessen analoges Ausgangstaktsignal gelangt über den Umschalter 12 zur analogen PLL 13. Der Umschalter 15 ist so geschaltet, daß das Ausgangssignal der analogen PLL 13 an der Ausgangsklemme 17 abgegriffen werden kann und an die Einheit 29 rückgekoppelt wird. Erfindungsgemäß stellt diese Betriebsart den Standardfall dar.

In der zweiten Betriebsart wird der Teil der Schaltung zur Erzeugung des Acquisitionstaktsignales entsprechend der ersten Betriebsart betrieben. Im Gegensatz zur ersten Betriebsart wird allerdings der Umschalter 12 so geschaltet, daß ein von außen zugeführtes Taktsignal die analoge PLL 13 steuert. Falls notwendig, kann das extern an der Klemme 26 zugeführte Taktsignal wahlweise über die Teiler 31 bzw. 36 auf die notwendige Frequenz herunter geteilt werden. Das Ausgangssignal der analogen PLL 13 wird dann wiederum über den Umschalter 15 der Ausgangsklemme 17 zugeführt. Der Zeilenpositionszähler 19 wird über den Umschalter 23 durch das an der Klemme 27 liegende horizontale Synchronisationssignal zurückgesetzt. Diese Betriebsart ermöglicht es wiederum, das Acquisitionstaktsignal aus einer ersten Signalquelle und das Displaytaktsignal aus einer zweiten Signalquelle zu erzeugen, wobei das Displaysignal z. B. aus einem digitalen Speicher ausgelesen werden kann, oder von einer speziellen Funktionseinheit geliefert wird, die z. B. Funktionen wie Standbild, 100 Hz-Betriebsart oder Bild-in-Bild-Funktionen liefern kann und den Takt an der Klemme 26 liefert.

In einer dritten Betriebsart läuft die PLL in der Einheit 29 frei, d. h. unabhängig von dem an der Eingangsklemme 27 anliegenden Signal. Hierzu wird der Umschalter 23 so geschaltet, daß das Ausgangssignal des Zählers 19 seinem Rücksetzeingang zugeführt wird. Die übrige Konfiguration entspricht der zweiten Betriebsart. In dieser Betriebsart sind die verschiedensten Displaytaktfrequenzen möglich, wie sie z. B. für Fernsehbilder mit dem Seitenverhältnis 16:9 oder anderen Formaten notwendig sind. Die gewünschten Displaytaktfrequenzen lassen sich mit dem digitalen Eingangswert des Oszillators 37 einstellen.

In einer vierten Betriebsart werden die Taktsignale für Display und Aquisition aus ein und derselben Quelle erzeugt. Hierzu gelangt das FBAS-Signal über die Eingangsklemme 28 zur Einheit 30. Der Umschalter 16 ist wiederum so geschaltet, daß die Einheit 30, der Oszillator 9 und die PLL 14 einen Regelkreis bilden. Der Umschalter 15 ist nun so geschaltet, daß an der Ausgangsklemme l7 das an der Ausgangsklemme 18 abgreifbare Ausgangssignal anliegt. Der Oszillator 37 und die PLL 13 haben in dieser Betriebsart keine Funktion. Die Schalter 23 und 24 sind so geschaltet, daß der Zeilen-Positions-Zähler 19 und der Zeilenzähler 20 der Einheit 29 durch den Zeilenzähler 21 und den Zeilen-Postions-Zähler 22 der Einheit 30 rückgesetzt werden. Durch die Maßnahme laufen die Zeilen-Positions-Zähler und die Zeilenzähler des Aquisitions- und Displayteils synchron zueinander.

Eine fünfte Betriebsart ermöglicht eine sogenannte Bausteinnotfunktion, bei der das Display-Taktsignal und das Acquisitionstaktsignal aus einem extern über die Klemme 26 zugeführten Taktsignal erzeugt werden. Dieser spezielle Fall ist für Entwicklungen vorgesehen, bei denen ein externer Slicer verwendet wird, falls der interne noch nicht richtig funktioniert. Hierzu ist der Schalter 12 derart geschaltet, daß das an der Eingangsklemme 26 anliegende Taktsignal eventuell geteilt durch die Teiler 31 bzw. 36 der analogen PLL 13 zugeführt wird. Das von der analogen PLL 13 erzeugte Signal wird über den Umschalter 15 an die Ausgangsklemme 17 geführt. Ebenso wird dieses Signal über den Umschalter 16 an die Ausgangsklemme 18 geführt. An der Eingangsklemme 27 liegt das VCS-Signal an. Der Zeilen-Positions-Zähler der Einheit 29 wird über den Schalter 23 vom Ausgangssignal des Zeilen-Positions-Zählers 22 der Einheit 30 zurückgesetzt. Der Zeilen-Positions-Zähler 22 läuft frei, d.h., setzt sich selbst zurück. Die beiden Zeilen-Zähler 20, 21 der Einheiten 29, 30 werden über die Umschalter 24 und 35 mit dem in dem VCS-Signal enthaltenen vertikalen Synchronisationssignal zurückgesetzt.

Die sechste Betriebsart ermöglicht die Videotext Acquisiton aus einer ersten Sendequelle sowie die gleichzeitige Erzeugung eines Displaytaktsignals aus einer zweiten Sendequelle. Über die Eingangsklemme 27 gelangen das horizontale und das vertikale Synchronsignal zur Einheit 29. Diese steuert den Zähler 19 und die digitale PLL. Die Umschalter 10, 12 und 15 sind derart geschaltet, daß die Einheit 29 der Oszillator 8 und die PLL 13 einen horizontalen Phasenregelkreis bilden. Der Umschalter 16 leitet das Ausgangssignal der PLL 13 an die Ausgangsklemme 18 und an die Einheit 30. Dadurch werden die beiden Zähler 21 und 22 der Einheit 30 von eben diesem Takt gesteuert. An der Eingangsklemme 28 liegt das FBAS-Signal an.

Diese Betriebsart sollte gewählt werden, wenn die Display-Signalquelle sehr gute horizontale und vertikale Synchronisationssignale liefert, das FBAS-Signal aber verrauscht oder gestört ist. So wird das Bild mit der von der Displaysignalquelle erzeugten Takt ungestört angezeigt.

In einer siebten Betriebsart entspricht die Takterzeugung des Acquisitionstakts dem der ersten Betriebsart. Die Einheit 29 läuft in dieser Betriebsart frei und erzeugt ein digitales Steuersignal, aus dem mit Hilfe des Oszillators 37 und der PLL 13 ein Displaytakt erzeugt wird der zur Ausgangsklemme 17 gelangt. Auf diese Betriebsart sollte umgeschaltet werden, wenn z. B. eine Videotextseite eingelesen ist, sich dann aber der Sender (d.h. das FBAS-Signal an der Klemme 28) so verschlechtert, daß kein Videotext mehr acquiriert werden kann. Mit Hilfe des ungestörten Displaytaktes ist eine störungsfreie Anzeige der bereits abgespeicherten Videotextseiten möglich.

In einer weiteren achten Betriebsart entspricht die Erzeugung des Display-Taktsignales dem der siebten Betriebsart. Über den Umschalter 16 gelangt dieses Taktsignal zur Ausgangsklemme 18 und steuert entsprechend der Betriebsart 6 die Einheit 30. Eine derartige Betriebsart wäre vorstellbar, wenn aus dem FBAS-Signal zwar die Acquisition der Videotextdaten möglich wäre, aber dessen horizontale und vertikale Synchronisationssignale gestört sind oder stark in ihrer Phasenlage schwanken.

In einer neunten Betriebsart wird der Display- und der Acquisitonstakt von einem extern zugeführten Taktsignal abgeleitet. Dieses Taktsignal wird über die Eingangsklemme 26 sowie den Umschalter 11 und 12 der PLL 13 zugeführt. Über den Umschalter 15 gelangt dieses Signal zur Ausgangsklemme 17 und somit auch zur Einheit 29. Ebenso gelangt dieses Signal über den Umschalter 16 an die Ausgangsklemme 18 sowie die Einheit 30. Die Zähler 19 und 20 der Einheit 29 werden über die Umschalter 23 und 24 durch das horizontale bzw. vertikale Synchronsignal, das an der Eingangsklemme 27 anliegt, zurückgesetzt. Falls notwendig, wird das an der Eingangsklemme 26 anliegende Taktsignal über einen der beiden Teiler 7 oder 31 auf die notwendige Frequenz heruntergeteilt. Diese Betriebsart stellt eine Kombination der zweiten und achten Betriebsart dar.

Die zehnte Betriebsart entspricht im wesentlichen der neunten Betriebsart mit dem Unterschied, daß die Zähler 19 und 20 der Einheit 29 nicht durch die an der Eingangsklemme 27 anliegenden Synchronsignale gesteuert werden, sondern vielmehr im Freilauf betrieben werden. Diese Betriebsart sollte gewählt werden, wenn bei der neunten Betriebsart eine Displayquelle vorhanden ist, die nur den Takt bestimmt.

Bei der elften Betriebsart wird mit Hilfe des FBAS-Signales an der Eingangsklemme 28 wie im 1. Betriebsfall ein Acquisitionstakt erzeugt. Dieser gelangt auch über den Umschalter 15 auf die Einheit 29. Die Schalter 23 und 24 stehen so, daß der Zähler 19 durch den Zähler 22 und der Zähler 20 durch den Zähler 21 zurückgesetzt wird. Die Eingangsklemmen 26 und 27 können unbeschaltet sein. Bei dieser Betriebsart erfolgt die Videotextacquisition und die Verarbeitung des Hauptbildes aus derselben Quelle.

In den beschriebenen Betriebsmodi wird zunächst davon ausgegangen, daß die Umschalter 10 und 25 so geschaltet sind, daß das Ausgangssignal der Einheit 29 zum Oszillator 37 und das Ausgangssignal der Einheit 30 zum Oszillator 38 geführt wird. Sollte es gewünscht sein, das Displaytaktsignal an das Aquisitonstaktsignal zu koppeln, daß aber unterscheidliche Ausgangsfrequenzen gewünscht sind, so kann dies durch Umschalten des Umschalters 10 erreicht werden. Die Mittel 33 vervielfachen oder teilen dann den von der Einheit 30 gelieferten digitalen Ausgangswert arithmetisch. Eine umgekehrte Kopplung ermöglicht in gleicher Weise Umschalter 25. Eine solche Kopplung ist z. B. bei verschiedenen Display-Formaten, z. B. im Seitenverhältnis 16:9, sinnvoll.

Die Umschalter 10, 11, 12, 15, 16, 23, 24 und 35 stellen die wesentlichen Umschaltfunktionen zur Verfügung. Sie sind je nach Vielzahl der Signale als Multiplexer oder einfache Umschalter ausgeführt. Weiterhin sind sie so dargestellt, daß sie lediglich die prinzipiellen Schaltfunktionen ausüben.

Weitere zusätzlich notwendige Multiplexer bzw. Umschalter sind in der FIG 2 nicht enthalten und müssen dementsprechend sinngemäß ausgeführt werden.

## Patentansprüche

1. Gerät zum Verarbeiten von in Zeilen aufgeteilten Videosignalen mit einer Anordnung zur Bereitstellung eines Display-Taktsignales und eines Akquisitionstaktsignales in einem Videosystem,
**gekennzeichnet durch** eine Display-Takteinheit (29, 37, 13) und eine Akquisitionstakteinheit (30, 38, 14) zur getrennten Takterzeugung, mit
- jeweils einer eine digitale Nachlaufsynchronisationsschaltung (39; 40) enthaltenden Funktionseinheit (29, 30), der ein Eingangssignal zugeführt wird, und die jeweils einen Zeilenzähler (20; 21) und einen Zeilenpositionszähler (19; 22) enthalten,
- jeweils einer der jeweiligen Funktionseinheit (29; 30) nachgeschalteten digital steuerbaren Oszillatoreinheit (37; 38) und - jeweils einer der Oszillatoreinheit (37; 38) nachgeschalteten analogen Nachlaufsynchronisationsschaltung (13; 14), die ein Ausgangssignal erzeugt und dieses einer jeweiligen Ausgangsklemme (17; 18) zuführt, an der das Display-Taktsignal bzw. das Akquisitionstaktsignal abgreifbar ist, wobei das an der jeweiligen Ausgangsklemme (17; 18) anliegende Signal zur einem weiteren Eingang der jeweiligen Funktionseinheit (29; 30) zurückgeführt wird.

2. Gerät nach Anspruch 1,
**dadurch gekennzeichnet,**
daß zwischen Ausgangsklemme (17, 18) und analoger Nachlaufsynchronisationsschaltung (13, 14) der Displaytakteinheit bzw. der Akquisitionstakteinheit ein Umschalter (15; 16) vorgesehen ist, der entweder das Ausgangssignal der analogen Nachlaufsynchronisationsschaltung (13) der Displaytakteinheit oder das der analogen Nachlaufsynchronisationsschaltung (14) der Akquisitionstakteinheit der jeweiligen Ausgangsklemme (17; 18) zuführt.

3. Gerät nach einem der vorhergehenden Ansprüche,
**dadurch gekennzeichnet,**
daß zwischen digital steuerbarer Oszillatoreinheit (37) und analoger Nachlaufsynchronisationsschaltung (13) der Display-Takteinheit ein Umschalter (12) vorgesehen ist, der entweder das von der digitalen steuerbaren Oszillatoreinheit (37) oder ein von außen zuführbares Taktsignal der analogen Nachlaufsynchronisationsschaltung (13) zuführt.

4. Gerät nach einem der vorhergehenden Ansprüche,
**dadurch gekennzeichnet,**
daß zwischen digitaler Nachlaufsynchronisationsschaltung (29; 30) und digital steuerbarem Oszillator (37; 38) der Displaytakteinheit bzw. der Acquisitionstakteinheit ein Umschalter (10; 25) vorgesehen ist, daß weiterhin Mittel (33; 34) vorgesehen sind, die den jeweils digitalen Ausgangswert der digitalen Nachlaufsynchronisationsschaltungen (29, 30) mit einem Faktor multiplizieren oder teilen, und daß der Umschalter (10; 25) entweder das von der digitalen Nachlaufsynchronisationsschaltung (29; 30) oder das von der jeweils anderen digitalen Nachlaufsynchronisationseinheit (30; 29) erzeugte Signal, welches über die Mittel (33, 34) geteilt oder multipliziert wurde, dem jeweiligen digitalen steuerbaren Oszillator (37; 38) zuführt.

5. Gerät nach einem der Ansprüche 1 bis 4,
**dadurch gekennzeichnet,** daß Mittel (23, 24) vorgesehen sind, durch die der Zeilenzähler (20) und der Zeilenpositionszähler (19) der Displaytakteinheit wahlweise durch Ausgangssignale der Zeilenzähler (21) bzw. der Zeilenpositionszähler (22) der Aquisitionstakteinheit zurückgesetzt werden.

6. Gerät nach einem der Ansprüche 1 bis 4,
**dadurch gekennzeichnet,** daß Mittel (23, 24) vorgesehen sind, durch die der Zeilenpositionszähler (19) der Displaytakteinheit wahlweise durch das Ausgangssignal des Zeilenpositionszählers (22) der Acquisitionstakteinheit zurückgesetzt wird und die Zeilenzähler (20, 21) der Display bzw. Akquisitionstakteinheit durch ein von außen zugeführtes Signal zurückgesetzt werden.

7. Gerät nach Anspruch 3,
**dadurch gekennzeichnet,**
daß das von außen zuführbare Taktsignal wahlweise durch einen von mehreren Teilern (31, 36) geteilt wird oder dem Schalter direkt zugeführt wird.

8. Gerät nach einem der vorhergehenden Ansprüche,
**dadurch gekennzeichnet,**
daß der digitalen Nachlaufsynchronisationsschaltung (29) der Displaytakteinheit das horizontale Synchronisationssignal und das vertikale Synchronisationssignal zugeführt werden.

9. Gerät nach einem der Ansprüche 1 bis 7,
**dadurch gekennzeichnet,**
daß der digitalen Nachlaufsynchronisationsschaltung der Displaytakteinheit das Video-Composite-Signal zugeführt wird und die digitale Nachlaufsynchronisationsschaltung Mittel enthält, die aus dem Video-Composite-Signal das horizontale und das vertikale Synchronisationssignal erzeugen.

10. Gerät nach einem der vorherigen Ansprüche,
**dadurch gekennzeichnet,**
daß ein der digitalen Nachlaufsynchronisationsschaltung der Akquisitionseinheit vorgeschalteter gesteuerter Analog-Digitalwandler (32) vorgesehen ist, dem das FBAS-Signal zugeführt wird und der von dem an der Ausgangsklemme (18) anliegenden Taktsignal gesteuert wird.

11. Gerät nach einem der vorherigen Ansprüche,
**dadurch gekennzeichnet,** daß der Zeilenpositionszähler (22) der Akquisitionstakteinheit sich selbst zurücksetzt.

## Claims

1. Apparatus for processing video signals split into lines, having an arrangement for providing a display clock signal and an acquisition clock signal in a video system, characterized by a display clock unit (29, 37, 13) and an acquisition clock unit (30, 38, 14) for separate clock generation, having
- in each case a functional unit (29, 30) which contains a digital tracking synchronization circuit (39; 40), has an input signal supplied to it and in each case includes a line counter (20; 21) and a line position counter (19; 22),
- in each case a digitally controllable oscillator unit (37; 38), which is connected downstream of the respective functional unit (29; 30), and in each case an analog tracking synchronization circuit (13; 14), which is connected downstream of the oscillator unit (37; 38), generates an output signal and supplies the latter to a respective output terminal (17; 18), at which the display clock signal or the acquisition clock signal can be respectively picked off, the signal present at the respective output terminal (17; 18) being returned to a further input of the respective functional unit (29; 30).

2. Apparatus according to Claim 1, characterized in that between the output terminal (17, 18) and the analog tracking synchronization circuit (13, 14) of the display clock unit and of the acquisition clock unit there is respectively provided a change-over switch (15; 16), which supplies to the respective output terminal (17; 18) either the output signal of the analog tracking synchronization circuit (13) of the display clock unit or that of the analog tracking synchronization circuit (14) of the acquisition clock unit.

3. Apparatus according to one of the preceding claims, characterized in that between the digitally controllable oscillator unit (37) and the analog tracking synchronization circuit (13) of the display clock unit there is provided a change-over switch (12), which supplies to the analog tracking synchronization circuit (13) either the clock signal from the digitally controllable oscillator unit (37) or a clock signal which can be supplied externally.

4. Apparatus according to one of the preceding claims, characterized in that between the digital tracking synchronization circuit (29; 30) and the digitally controllable oscillator (37; 38) of the display clock unit and of the acquisition clock unit there is respectively provided a change-over switch (10; 25), in that furthermore there are provided means (33; 34) which multiply or divide the respective digital output value of the digital tracking synchronization circuits (29, 30) by a factor, and in that the change-over switch (10; 25) supplies to the respective digital controllable oscillator (37; 38) either the signal generated by the digital tracking synchronization circuit (29; 30) or that generated by the respectively other digital tracking synchronization unit (30; 29), which signal has been divided or multiplied by the means (33, 34).

5. Apparatus according to one of Claims 1 to 4, characterized in that there are provided means (23, 24) by which the line counter (20) and the line position counter (19) of the display clock unit are optionally reset by output signals of the line counter (21) or the line position counter (22) respectively of the acquisition clock unit.

6. Apparatus according to one of Claims 1 to 4, characterized in that there are provided means (23, 24) by which the line position counter (19) of the display clock unit is optionally reset by the output signal of the line position counter (22) of the acquisition clock unit, and the line counters (20, 21) of the display clock unit and acquisition clock unit are reset by an externally supplied signal.

7. Apparatus according to Claim 3, characterized in that the externally suppliable clock signal is optionally divided by one of a plurality of dividers (31, 36) or is supplied directly to the switch.

8. Apparatus according to one of the preceding claims, characterized in that the horizontal synchronization signal and the vertical synchronization signal are supplied to the digital tracking synchronization circuit (29) of the display clock unit.

9. Apparatus according to one of Claims 1 to 7, characterized in that the video composite signal is supplied to the digital tracking synchronization circuit of the display clock unit and the digital tracking synchronization circuit includes means which generate the horizontal synchronization signal and the vertical synchronization signal from the video composite signal.

10. Apparatus according to one of the preceding claims, characterized in that a controlled analog-to-digital converter (32), connected upstream of the digital tracking synchronization circuit of the acquisition clock unit is provided, to which converter the composite colour video signal is supplied and which converter is controlled by the clock signal present at the output terminal (18).

11. Apparatus according to one of the preceding claims, characterized in that the line position counter (22) of the acquisition clock unit resets itself.

## Revendications

1. Appareil de traitement de signaux vidéo répartis en lignes, comportant un dispositif de mise à disposition d'un signal de cadence d'affichage et d'un signal de cadence d'acquisition dans un système vidéo,
caractérisé par une unité (29, 37, 13) de cadence d'affichage et une unité (30, 38, 14) de cadence d'acquisition pour la production séparée de cadence, comportant chacune
- une unité fonctionnelle (29, 30), qui comprend un circuit (39 ; 40) numérique de synchronisation de poursuite, à laquelle est envoyé un signal d'entrée et qui comprend un compteur (20 ; 21) de lignes et un compteur (19 ; 22) de position de lignes,
- une unité (37 ; 38) d'oscillateur branchée en aval de l'unité respective (29 ; 30) et pouvant être commandée numériquement et un circuit (13 ; 14) de synchronisation de poursuite analogique, qui est branché en aval de l'unité (37 ; 38) d'oscillateur, qui produit un signal de sortie et qui envoie ce signal à une borne (17 ; 18) de sortie de laquelle le signal de cadence d'affichage ou le signal de cadence d'acquisition peut être prélevé,
le signal présent à la sortie (17 ; 18) respective de sortie étant réenvoyé à une autre entrée de l'unité fonctionnelle respective (29 ; 30).

2. Appareil suivant la revendication 1, caractérisé en ce que
il est prévu entre la borne (17, 18) de sortie et le circuit (13, 14) analogique de synchronisation de poursuite de l'unité de cadence d'affichage ou de l'unité de cadence d'acquisition un commutateur (15 ; 16), qui envoie soit le signal de sortie du circuit (13) analogique de synchronisation de poursuite de l'unité de cadence d'affichage, soit celui du circuit (14) analogique de synchronisation de poursuite de l'unité de cadence d'acquisition à la borne (17 ; 18) respective de sortie.

3. Appareil suivant l'une des revendications précédentes,
caractérisé en ce que
il est prévu entre l'unité (37) d'oscillateur pouvant être commandée numériquement et le circuit (13) analogique de synchronisation de poursuite de l'unité de cadence d'affichage un commutateur (12), qui envoie soit le signal de cadence pouvant être envoyé par l'unité (37) d'oscillateur pouvant être commandée numériquement, soit un signal de cadence pouvant être envoyé de l'extérieur, au circuit (13) analogique de synchronisation de poursuite.

4. Appareil suivant l'une des revendications précédentes,
caractérisé en ce que
il est prévu entre le circuit numérique (29 ; 30) de synchronisation de poursuite et l'oscillateur (37 ; 38) pouvant être commandé numériquement de l'unité de cadence d'affichage ou de l'unité de cadence d'acquisition un commutateur (10 ; 25), il est prévu en outre des moyens (33 ; 34) , qui multiplient ou divisent la valeur numérique respective de sortie des circuits (29, 30) numériques de synchronisation de poursuite par un facteur et le commutateur (10 ; 25) envoie soit le signal produit par le circuit (29 ; 30) numérique de synchronisation de poursuite ou le signal, qui est produit par l'autre unité numérique respective (30 29) de synchronisation de poursuite et qui a été multiplié ou divisé par l'intermédiaire des moyens (33, 34), à l'oscillateur (37 ; 38) respectif pouvant être commandé numériquement.

5. Appareil suivant l'une des revendications 1 à 4,
caractérisé en ce qu'il est prévu des moyens (23, 24), par lesquels le compteur (20) de lignes et le compteur (19) de position de lignes de l'unité de cadence d'affichage peuvent être remis à l'état initial au choix par le signal de sortie des compteurs (21) de lignes ou des compteurs (22) de position de lignes de l'unité d'acquisition.

6. Appareil suivant l'une des revendications 1 à 4,
caractérisé en ce qu'il est prévu des moyens (23, 24) par lesquels le compteur (19) de position de lignes de l'unité de cadence d'affichage peut être remis à l'état initial au choix par le signal de sortie du compteur (22) de position de lignes de l'unité de cadence d'acquisition et par lesquels les compteurs (20, 21) de lignes de l'unité de cadence d'affichage ou d'acquisition peuvent être remis à l'état initial par un signal envoyé de l'extérieur.

7. Appareil suivant la revendication 3,
caractérisé en ce que
le signal de cadence pouvant être envoyé de l'extérieur est divisé par un diviseur parmi plusieurs diviseurs (31, 36) ou est envoyé directement au commutateur.

8. Appareil suivant l'une des revendications précédentes,
caractérisé en ce que
le signal de synchronisation horizontal et le signal de synchronisation vertical sont envoyés au circuit (29) numérique de synchronisation de poursuite de l'unité de cadence d'affichage.

9. Appareil suivant l'une des revendications 1 à 7, caractérisé en ce que
le signal composite vidéo est envoyé au circuit numérique de synchronisation de poursuite de l'unité de cadence d'affichage et le circuit numérique de synchronisation de poursuite comprend des moyens, qui produisent à partir du signal composite vidéo le signal horizontal et le signal vertical de synchronisation.

10. Appareil suivant l'une des revendications précédentes,
caractérisé en ce que
il est prévu un convertisseur (32) analogique-numérique commandé, qui est branché en amont du circuit numérique de synchronisation de poursuite de l'unité d'acquisition, auquel est envoyé le signal composé de chrominance et qui est commandé par le signal de cadence présent à la borne (18) de sortie.

11. Appareil suivant l'une des revendications précédentes,
caractérisé en ce que le compteur (22) de position de lignes de l'unité de cadence d'acquisition se remet à l'état initial lui-même.
